# EUROPÄISCHE PATENTANMELDUNG

(11) **EP 1 404 114 A1**
(43) Veröffentlichungstag der Anmeldung: **31.03.2004**
(21) Anmeldenummer: 02021176.9
(22) Anmeldetag: 24.09.2002
(51) Int. Cl.: H04N 1/407, H04N 1/409

(54) **Digitales Bildverarbeitungsverfahren zur automatischen Kontrastmodifikation**

(71) Anmelder: Agfa-Gevaert AG, 51373 Leverkusen (DE)
(72) Erfinder: Schuhrke, Thomas, 81549 München (DE); Rother, Martin, 81547 München (DE)

(57) **Zusammenfassung**

Die Erfindung betrifft ein Bildverarbeitungsverfahren zur automatischen Kontrastmodifikation digitaler Bilddaten. Ausgehend vom digitalen Bildsignal der Bilddaten wird wenigstens ein tief- und ein hochfrequenter Signalanteil gebildet, der tieffrequente Signalanteil mittels einer Kennlinie modifiziert und der modifizierte, tieffrequente Signalanteil wieder mit dem hochfrequenten Signalanteil addiert. Um dabei die Entstehung störender Artefakte, sogenannter Halos, zu vermeiden erfolgt die Bildung des zu modifizierenden, tieffrequenten Signalanteils in Abhängigkeit von hochfrequenten Bildanteilen.

## Beschreibung

Die Erfindung betrifft ein Bildverarbeitungsverfahren zur automatischen Kontrastmodifikation digitaler Bilddaten, nach dem Oberbegriff von Anspruch 1.

Digitale Bilddaten weisen oft sehr große Helligkeitsunterschiede auf und sind deshalb sehr schwer auf Fotopapier wiederzugeben, da diese Materialien einen zu geringen Kontrastumfang aufweisen. So sind die Kopien derartiger Bilder dann entweder in den hellen Bereichen über- oder aber in den dunklen Bereichen unterbelichtet. Einzelne Details sind dann in den entsprechenden unter- bzw. überbelichteten Bereichen der Kopie nur noch sehr schlecht oder gar nicht mehr zu erkennen. Klassisches Beispiel hierfür ist die fotografische Aufnahme eines beschatteten Torbogens mit extrem hellem Hintergrund. Um bei derartigen Kopien digitaler Bilddaten die Qualität solcher kontrastreicher Aufnahmen auf den Papierbildern zu verbessern, wurden Verfahren zur Kontrastmodifikation entwickelt.

Ein derartiges Verfahren, bei dem insbesondere der globale Kontrast (Gradation) von digitalen Bilddaten modifiziert wird, ist in der DE 3629409 C2 beschrieben. Dieses Kontrastmodifikationsverfahren basiert darauf, die digitalen Bilddaten einer Frequenzfilterung zu unterziehen, in der diese in einen Tiefpass- und einen Hochpassanteil aufgespalten werden. Um den globalen Kontrast zu optimieren, werden die Tiefpass-Signale entsprechend einer nicht linearen Gradationstrennlinie modifiziert. Die so modifizierten Tiefpass-Signale werden dann wiederum mit den Hochpass-Signalen addiert, wobei im allgemeinen die Hochpass-Signale ebenfalls modifiziert werden, um beispielsweise eine Verschärfung der im Bild enthaltenen Detailinformationen vorzunehmen. Die Modifikation des Kontrastes wird jedoch ausschließliche im Tiefpassanteil realisiert, da der Hochpassanteil keine Einflussnahme auf globale Bildgrößen zulässt.

Bei der Anwendung derartiger Bildverarbeitungsverfahren zur Kontrastmodifikation hat es sich jedoch gezeigt, dass bei bestimmten Motiven unerwünschte Artefakte ausgelöst werden. So wird beispielsweise ein dunkles Motiv vor einem Hintergrund mittlerer Dichte, nach einer Kontrastmodifikation des Bildes, so wiedergegeben, dass um das dunkle Motiv herum ein sehr heller Rand entsteht, der sich erst in größerem Abstand von dem Motiv, der Dichte des Hintergrunds anpasst. Eine derartige Erscheinung wird auf Grund seines Aussehens auch "white halo" genannt. Bei einer entgegengesetzt gearteten Dichtekonstellation kann es ebenso zu sogenannten "black halos" kommen, wenn ein helles Motiv vor einem Hintergrund mittlerer Dichte wiedergegeben werden soll.

Dieses Problem ist von Kontrastmodifikationsverfahren, bei der herkömmlichen Kopie von fotografischen Filmen auf Fotopapier, bereits bekannt. Bei diesem herkömmlichen Verfahren wird der Kontrast modifiziert, indem das Kopierlicht, welches das Negativ beleuchtet, mittels einer digital erzeugten, durch ein LCD realisierten, Maske lokal beeinflusst wird. Die Maske gibt dabei ein stark verunschärftes, invertiertes Abbild des zu kopierenden Motivs wieder. Bei diesem Verfahren wird das Phänomen der Halos dadurch gelöst, dass die sehr starken Hell/Dunkelübergänge, welche diese Phänomene hervorrufen, in der Maske leicht verschoben werden. Die Verschiebung erfolgt in Bereiche, in denen das Fotopapier entweder sehr stark oder sehr gering belichtet wird, da in diesen Bereichen die Empfindlichkeit des Papiers gegenüber kleinen Dichteabstufungen sehr gering ist. Dadurch wird bewirkt, dass die starken Kontrastübergänge in nahezu nicht sichtbare Bereiche der Dichten verschoben werden. Ein derartiges Verfahren ist beispielsweise in der DE 197 03 063 C2 beschrieben. Diese Vorgehensweise, zur Vermeidung der unerwünschten Halos, ist jedoch bei einem Bildverarbeitungsverfahren für digitale Bilddaten, wie dem in der DE 3629409 C2 beschriebenen, nicht anwendbar, da bei diesem Verfahren nicht explizit eine unscharfe Maske berechnet wird, welche bei starken Hell/Dunkelübergängen modifiziert werden könnte.

Es war deshalb Aufgabe der Erfindung, ein Bildverarbeitungsverfahren zur Kontrastmodifikation für digitale Bilddaten so zu realisieren, dass die beschriebenen "Halo"-Erscheinungen vermieden oder zumindest reduziert werden können.

Gelöst wird diese Aufgabe, gemäß der Erfindung, durch ein Bildverarbeitungsverfahren zur automatischen Kontrastmodifikation digitaler Bilddaten mit den Merkmalen von Anspruch 1.

Erfindungsgemäß wird die Tiefpassbildung, welche innerhalb des Bildverarbeitungsverfahrens für digitale Bilddaten zur Kontrastmodifikation erfolgt, abhängig von hochfrequenten Anteilen der digitalen Bilddaten, vorgenommen. In Bildbereichen, in denen hohe Frequenzen großer Amplituden auftreten, befinden sich Dichtesprünge im Bildinhalt. Bei herkömmlichen Kontrastmodifikationsverfahren treten in diesen Bereichen großer Dichtesprünge die Halo-Erscheinungen auf. Es zeigte sich, dass diese störenden Erscheinungen bei der Kontrastmodifikation digitaler Bilddaten ebenfalls auftreten. Es konnte gezeigt werden, dass sie durch Überschwingungen, im Bereich der Dichtesprünge, verursacht werden. Diese Überschwingungen werden erfindungsgemäß dadurch vermieden bzw. zumindest reduziert, indem der zu modifizierende Tiefpassanteil des Bildsignals, im Bereich der kritischen Stellen, mit einem Hochpassanteil des Signals beaufschlagt wird. Wird nun der so modifizierte Tiefpass reduziert, um eine Kontrastmodifikation vorzunehmen, und schließlich wieder mit dem Hochpass-Signal vereint, so können die Überschwingungen deutlich reduziert, im Idealfall sogar vermieden werden. Dieses Ergebnis wird dadurch erzielt, dass durch das Hinzufügen eines Hochpassanteils, im Bereich der Dichtsprünge zum Tiefpassanteil, gewissermaßen in diesem Bereich, an Stelle einer unscharfen, eine scharfe Maske gebildet wird. So kann der Kontrast lokal an jeder Seite des Dichtesprungs bzw. der Kante, ohne negative Einflussnahme der an der anderen Seite der Kante vorherrschenden Dichte, verändert werden. Die Mittelung, welche gewissermaßen der Tiefpassbildung entspricht, findet nämlich im Bereich der Kante somit erfindungsgemäß nur über wenige Bilddatenpunkte statt. Die Kante wird also im Idealfall (unter Hinzunahme des gesamten Hochpassanteils) exakt wiedergegeben.

Vorteilhafterweise erfolgt die Bildung des Tiefpass-Signals erfindungsgemäß so, dass die zur Bildung des Tiefpass-Signals verwendete Filterfrequenz im Bereich großer Dichtesprünge anders gewählt wird, als in dichtehomogeneren Bildbereichen. Bei der Kontrastmodifikation kommt also eine lokal, in Abhängigkeit vom lokalen Kontrastumfang variierte Filterfrequenz, für die Bildung des Tiefpass-Signals, zum Einsatz. Wie in den bereits bekannten Bildverarbeitungsverfahren zur Kontrastmodifikation wird dieses Tiefpass-Signal nun zur Bildung der höherfrequenten Signalanteile verwendet, mit denen es nach seiner Reduzierung wieder zusammengeführt wird.

Eine weitere vorteilhafte Ausführungsform der Erfindung besteht darin, die Bildung des tieffrequenten Signalanteils wie bisher mit einer konstanten Filterfrequenz vorzunehmen, aber anschließend zum Tiefpass-Signal im Bereich von Dichtesprüngen einen höherfrequenten Anteil hinzu zu addieren, um so einen modifizierten Tiefpass zu erhalten, an dem schließlich die Reduzierung des Kontrastes vorgenommen wird. Dieses Vorgehen ist insbesondere dann vorteilhaft, wenn im Rahmen des Bildverarbeitungsverfahrens das Bildsignal nicht nur in einen hochund einen tieffrequenten Anteil aufgespalten wird, sondern zusätzlich noch mittelfrequente Signalanteile abgespalten werden. In diesem Fall werden vorteilhafterweise mittelfrequente Signalanteile zum tieffrequenten Signal hinzuaddiert, wo Dichtesprünge in den Bilddaten vorliegen.

In einer besonders vorteilhaften Ausführungsform werden die hochfrequenten Bildanteile, also die Dichtesprünge, bei denen das Tiefpass-Signal modifiziert gebildet wird, anhand eines sogenannten Kantendetektionsverfahrens ermittelt. Die Detektion von Kanten im Bildinhalt erfolgt im Allgemeinen bei Bildverarbeitungsverfahren von digitalen Bilddaten ohnehin im Rahmen der Bildverschärfung. Um einen schärferen, präziseren Bildeindruck entstehen zu lassen, werden im Rahmen der digitalen Bildbearbeitung diese Kanten aufgesteilt. Der zusätzliche Rechenaufwand, zur Ermittlung der hochfrequenten Bildanteile, ist also geringer, wenn diese, aus der Bildverschärfung bereits bekannte Information, genutzt wird. Es müssen lediglich die Kanten der relevanten Frequenzbereiche ausgewählt werden.

Insbesondere dann, wenn keine Bildverschärfung durchgeführt werden soll oder wenn der Bildverarbeitungsschritt Verschärfung erst nach dem Bildverarbeitungsschritt Kontrastmodifikation erfolgt, liegt diese Kanteninformation jedoch nicht vor. In diesem Fall können die hochfrequenten Bildanteile aus der Fouriertransformierten der Bilddaten ermittelt werden.

Da die Fouriertransformation von digitalen Bilddaten jedoch ein relativ aufwendiger Rechenschritt ist, besteht eine besonders vorteilhafte Ausführungsform der Erfindung darin, die hochfrequenten Bildanteile aus der komprimierten Form der Bilddaten zu ermitteln. Dazu werden die komprimierten Bilddaten soweit dekomprimiert bis das Frequenzspektrum der Bilddaten vorliegt, d. h. die Dekompression der Daten wird angehalten, bevor die Rücktransformation in den Ortsraum erfolgt. Die nach dem Rückgängigmachen der Codierung vorliegenden Bilddaten im Frequenzspektrum sind in Blöcke aufgeteilt, welche sich bestimmten Bildpositionen zuordnen lassen. In Blöcken, in denen eine Vielzahl hoher Frequenzen vertreten ist, werden in den entsprechenden Bildbereichen viele Dichtesprünge zu beobachten sein. Erfindungsgemäß werden nun Bilddaten dieser Blöcke mit einem anderen Frequenzfilter gefiltert als solche Blöcke, die im Bereich hoher Frequenzen nur Nullen aufweisen. Die Filterfrequenz zur Bildung des Tiefpass-Signals wird also, abhängig von der Besetzung der hohen Frequenzen, innerhalb der Blöcke der komprimierten Bilddaten vorgenommen. Die Verwendung der komprimierten Bilddaten ist besonders vorteilhaft, da hierbei ein Frequenzspektrum ausgewertet werden kann ohne aufwändige Rechenschritte, wie eine Fouriertransformation, vornehmen zu müssen.

Weitere Einzelheiten und Vorteile der Erfindung ergeben sich aus den Unteransprüchen im Zusammenhang mit der Beschreibung eines Ausführungsbeispiels, das anhand der Zeichnungen eingehend erläutert wird.

Es zeigen:
- Fig. 1: Ein Ablaufdiagramm eines erfindungsgemäßen Kontrastmodifikationsverfahrens komprimierter digitaler Bilddaten,
- Fig. 2: Ein Ablaufdiagramm eines erfindungsgemäßen Kontrastmodifikationsverfahrens, welches mit einem Verfahren zur Bildverschärfung kombiniert wird und
- Fig. 3 und 4: Diagramme zur Veranschaulichung der erfindungsgemäß gelösten Problematik der Halo-Entstehung.

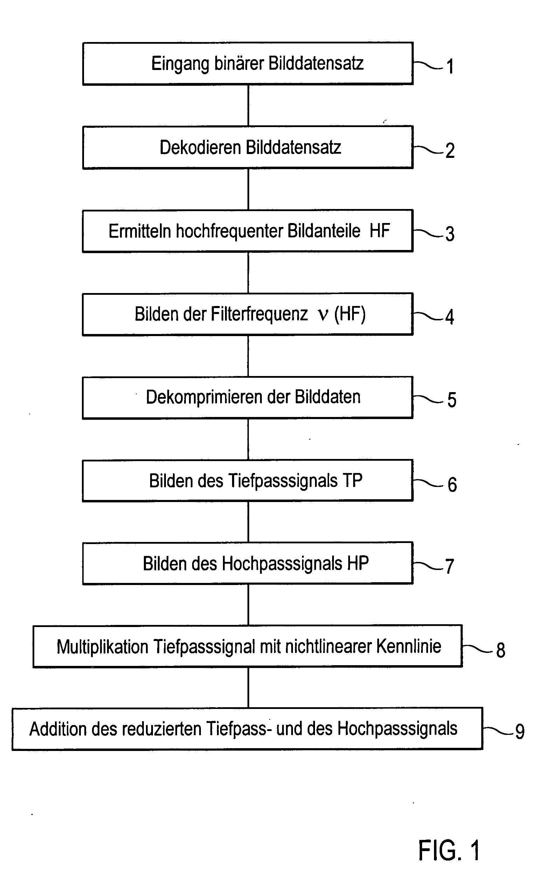

Fig. 1 gibt einen Überblick über den Ablauf eines Bildverarbeitungsverfahrens zur automatischen Kontrastmodifikation digitaler Bilddaten, bei dem die Erfindung realisiert ist. Die zu bearbeitenden komprimiert eingehenden Bilddaten liegen in 1 in binärer Form vor. In einem Bildverarbeitungsschritt 2 werden diese Bilddaten decodiert. Im Rahmen dieses Decodierverfahrens wird der eingegebene Bitstrom, ein eindimensionaler Vektor, in eine zweidimensionale Matrix, mit unterschiedlichen Werten, zurückverwandelt. Genau genommen liegen nach dem Decodieren drei Matrizen, eine Y-Komponente für die Helligkeit, eine Cb-Komponente für eine Farbe und eine Cr-Komponente für eine weitere Farbe vor. Derartige Decodierverfahren sind bekannt und können als freie Software bezogen werden. Im Falle von derzeit gängigen, im JPEG-Verfahren komprimierten Bilddaten ist jede der Matrizen in Werteblöcke des Formats 8x8 aufgeteilt. Das JPEG-Verfahren wird hier im Ausführungsbeispiel beispielhaft verwendet, die Erfindung lässt sich jedoch auch für andere Komprimierverfahren verwenden, bei denen die kompriemierten Bilddaten im Frequenzspektrum vorliegen und eine Zuordnung zum Ort im Bilddatensatz möglich ist. So kann die Erfindung z. B. auch auf JPEG 2000 komprimierte Bilddaten angewandt werden. Voraussetzung ist, dass die Lage der Blöcke, innerhalb der Matrix, einer bestimmbaren Position der zugehörigen Bilddaten im Ausgangsbild entspricht, wie das bei JPEG-komprimierten Bilddaten der Fall ist. Bei diesem Komprimierverfahren weist jeder Block eine DC-Komponente auf, die mit dem Blockmittelwert besetzt ist und sich links oben im Block befindet. Diese Komponente gibt Aufschluss über die Bilddichte im Bereich des 8x8-Blockes. Die weiteren Werte der Matrizen, die AC-Komponenten, sind Frequenzwerte, wobei sich die AC-Komponenten der tieferen Frequenzen in der Nähe der DC-Komponente befinden, die AC-Komponenten höherer Frequenzen liegen am Blockrand, die Frequenz nimmt also mit der Entfernung zur DC-Komponente zu. Befinden sich also beispielsweise im rechten unteren Quadranten eines Blockes nur Nullen, so heißt das, dass im Bildbereich, der diesem Block entspricht, keine großen Farb- oder Helligkeitsunterschiede, je nach analysierter Matrix, auftreten. Häufen sich dagegen hohe Werte der AC-Komponenten an den der DC-Komponente abgewandten Rändern, so weist der Bildinhalt an den entsprechenden Positionen Dichtesprünge auf. Hohe Werte der AC-Komponenten in der Matrix, der Y-Komponente, sind ein Anzeichen für starke Helligkeitsunterschiede, deuten also auf kritische Bildstellen hin, an denen bei der Kontrastmodifikation die Gefahr einer Halo-Erscheinung sehr groß ist. Hohe AC-Komponentenwerte in den Matrizen, die die Farbkomponenten wiedergeben, sind dann relevant, wenn eine Modifikation im Farbenkontrast vorgenommen werden soll. Geht es dagegen nur um eine Kontrastmodifikation in der Bildhelligkeit, so genügt es, die Matrix der Y-Komponente zu betrachten. Aus den Werten, mit denen die AC-Komponenten in den Blöcken besetzt sind, lassen sich also Sprünge in der Helligkeit bzw. die hochfrequenten Bildanteile ermitteln.

Damit ist bekannt, in welchen Blöcken die Bildinformation weitgehend dichtehomogen ist und in welchen Blöcken sich Helligkeitssprünge im Bildinhalt zeigen. Diese Information wird genutzt, um in einem Schritt 4 die Filterfrequenz für die Tiefpassfilterung zu bilden. Diese Filterfrequenz wird jeweils so gewählt, dass im Bereich der sehr homogene Bilddaten repräsentierender Blöcke eine sehr niedrige Frequenz gewählt wird, so dass im Tiefpass-Signal ausschließlich sehr tiefe Frequenzen enthalten sind. Für Bilddaten, die durch Blöcke repräsentiert werden, welche sehr hohe AC-Komponenten im Randbereich aufweisen, wird hingegen eine sehr hohe Filterfrequenz gewählt, so dass das zu bildende Tiefpass-Signal später einen vergleichsweise großen Anteil hoher Frequenzen enthält. Das Tiefpass-Signal, welches in einem Schritt 6 gebildet wird, nachdem die Bilddaten in einem Schritt 5 dekomprimiert wurden, gibt also in eher homogenen Bildbereichen das Bild nur sehr unscharf wieder, wo hingegen es in Bildbereichen, welche Dichtesprünge aufweisen ein vergleichsweise scharfes Abbild des Bildinhalts entsteht. Durch Subtraktion des Tiefpass-Signals vom gesamten Bildsignal wird nun in einem Schritt 7 das Hochpass-Signal abgeleitet.

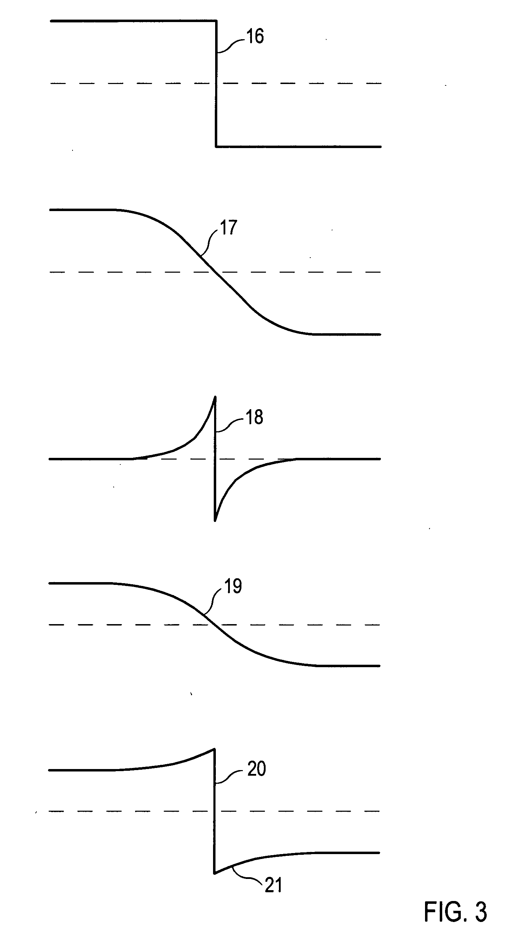

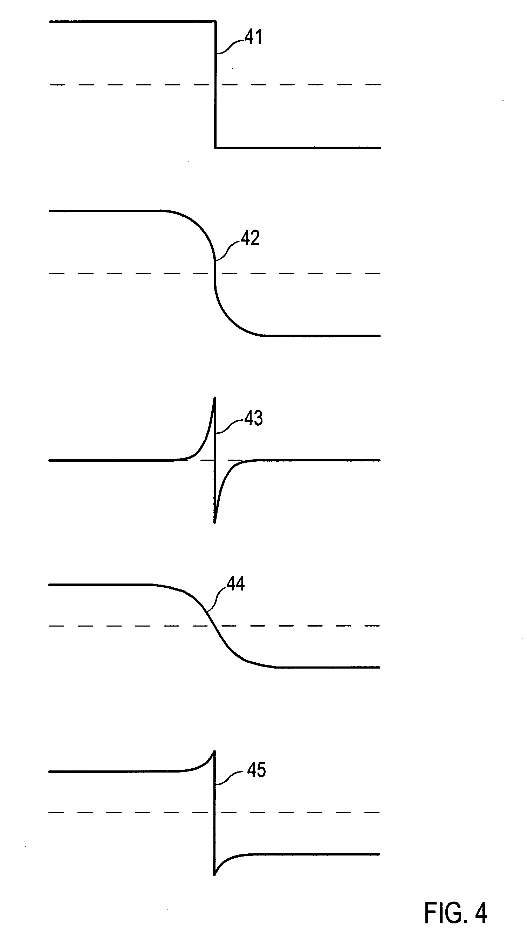

Im Schritt 8 erfolgt die eigentliche Kontrastmodifikation, indem das in Schritt 6 gebildete Tiefpass-Signal mit einer nicht linearen Kennlinie beaufschlagt wird. Hierdurch wird der gesamte Tiefpassanteil des Bildsignals reduziert, der Kontrastumfang wird stark verringert. In einem letzten Bildverarbeitungsschritt 9 wird schließlich dieses reduzierte Tiefpass-Signal wieder mit dem Hochpass-Signal addiert. Durch die Addition erhält man ein kontrastreduziertes Gesamtsignal, in dem die Detailinformation des Bildinhalts, welche vom Hochpass-Signal repräsentiert wird, erhalten blieb. Insbesondere zeigen die Bilddaten dieses Gesamtsignals keine störenden Halo-Erscheinungen. Diese werden dadurch vermieden, dass der Tiefpassanteil im Bereich von Dichtesprüngen sehr hohe Frequenzen erhält, was bewirkt, dass der Tiefpassanteil hier den Verlauf des ursprünglichen Gesamtsignals sehr gut repräsentiert. Dieser Zusammenhang wird in Fig. 3 und 4, nach der Schilderung eines weiteren Ausführungsbeispiels, eingehend erläutert.

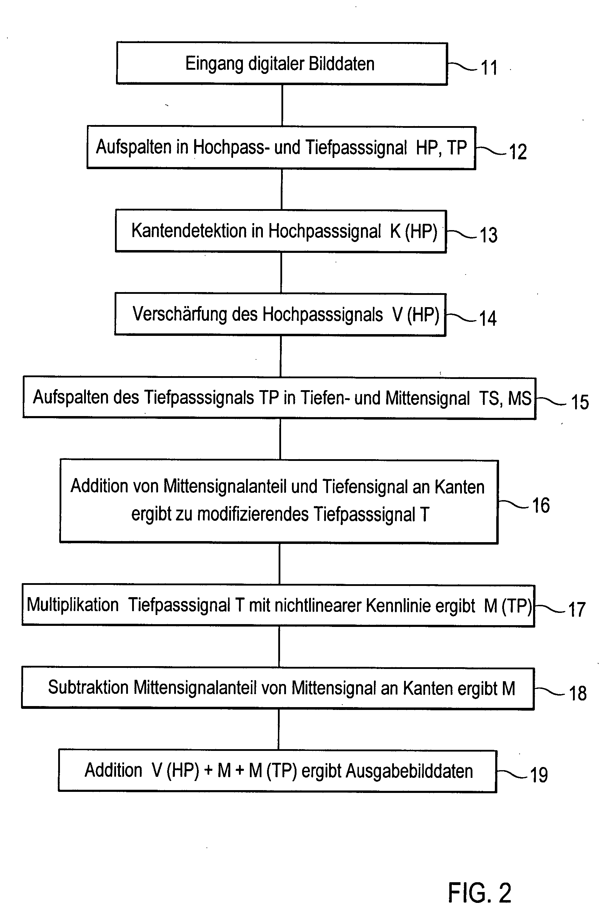

In dem in Fig. 2 skizzierten weiteren Ausführungsbeispiel wird ein weiteres vorteilhaftes Verfahren geschildert, welches zur erfindungsgemäßen Tiefpassbildung verwendet werden kann. Hierbei wird von nicht komprimierten digitalen Bilddaten ausgegangen, welche in einem Schritt 11 eingehen. Diese Bilddaten werden in einem Schritt 12 mit einer vorgewählten Filterfrequenz in ein Hochpass- und ein Tiefpass-Signal aufgespalten. In einem Bildverarbeitungsschritt 13 werden im Hochpass-Signal Dichtesprünge, also sogenannte Kanten detektiert. Derartige Kantendetektionsverfahren sind im Bereich der Bildverarbeitung, insbesondere der Bildverschärfung, hinreichend bekannt. Das Ergebnis, dieses zur Bildverschärfung verwendete Kantendetektionsverfahren, erfährt vorteilhafterweise eine zweite Anwendung. Entsprechend der gängigen Bildverarbeitung wird das Kantendetektionsverfahren aber auch verwendet, um in einem Schritt 14 eine Verschärfung des Hochpass-Signals vorzunehmen. Je nach Aufbau der Software und Hardware, mit welcher das Bildverarbeitungsverfahren realisiert wird, kann es vorteilhafter sein, die Schritte in der beschriebenen Reihenfolge auszuführen oder aber diese und folgende Schritte in anderer Reihenfolge oder parallel zueinander vorzunehmen. In serieller Reihenfolge schließt sich in einem Bildverarbeitungsschritt 15 nun das Aufspalten des Tiefpass-Signals in ein weiteres Tiefen- und ein Mittensignal an. Hierdurch entsteht ein Tiefensignal für die Kontrastmodifikation, welches nur die tiefsten Frequenzen des Bildes enthält und eine extreme Modifikation des Kontrastumfangs zulässt. Auf das Mittensignal kann ebenfalls Einfluss genommen werden, es kann aber auch in seiner originalen Form belassen werden. Diese Aufspaltung in mehrere Höhen-, Mitten- und Tiefensignale wird in einigen Bildverarbeitungsverfahren angewandt, in denen ein differenzierteres Vorgehen in der Kontrast- und Schärfebeeinflussung der Bilddaten wünschenswert ist.

Erfindungsgemäß wird im Bildverarbeitungsschritt 16 in den als Kanten erkannten Bildbereichen ein Anteil des Mittensignals zum Tiefpass-Signal addiert, so dass sich für die Kontrastmodifikation ein kanten- also bildinhaltsabhängiges Tiefpass-Signal ergibt, welches im Bereich der Dichtesprünge auch höhere Frequenzen beeinhaltet. In einem Schritt 17 wird nun der Kontrastumfang reduziert, indem dieses in Schritt 16 gebildete, modifizierte Tiefpass-Signal mit einer nicht linearen Kennlinie multipliziert wird. Somit ergibt sich der kontrastreduzierte Tiefpassanteil, welcher erfindungsgemäß im Bereich von Dichtesprüngen, auf Grund des enthaltenen hochfrequenten Anteils, den Verlauf der Kanten verhältnismäßig scharf wiedergibt.

Der Anteil des Mittensignals, welcher zur Bildung des modifizierten Tiefpass-Signals verwendet wurde, muss nun in einem Bildverarbeitungsschritt 18, vor dem zusammenführen von Tiefen- und Mittensignal mit dem modifizierten Hochpass-Signal, wieder berücksichtigt werden. Um zu vermeiden, dass dieser Anteil doppelt eingeht, wird er vom Mittensignal subtrahiert. Schließlich ergibt sich in einem Bildverarbeitungsschritt 19 das verbesserte Gesamtsignal, indem das verschärfte Hochpass-Signal, das modifizierte, kontrastreduzierte Tiefpass-Signal sowie das angepasste Mittensignals addiert werden.

Dieses Verfahren kann beliebig erweitert werden, indem das ursprüngliche Signal in beliebig viele Frequenzanteile aufgespalten wird, welche, je nach zu ereichendem Bildergebnis, verschärft oder in ihrem Umfang reduziert werden, was allein von der Wahl der Kennlinie, mit der Sie beaufschlagt werden, abhängt. Erfindungsgemäß wird dabei vorteilhafterweise bei der Bildung der Frequenzanteile nicht jeweils ein konstanter Filterwert verwendet, sondern es wird die Filterfrequenz für das jeweilige Band in Abhängigkeit von hochfrequenten Bildanteilen bzw. Dichtesprüngen oder Kanten gebildet. Das im Ausführungsbeispiel nach Fig. 2 vorgeschlagene Verfahren kann erweitert werden, indem im Bereich von Dichtesprüngen sehr großen Umfangs sogar Signalanteile mehrerer Frequenzbänder zusammengefasst werden.

In Fig. 3 und 4 wird nun schematisch erläutert, welche Auswirkung die erfindungsgemäß vom hochfrequenten Bildanteil abhängig gemachte Tiefpassbildung im Rahmen der Kontrastmodifikation hat, um so die Lösung des Problems der Halo-Erscheinungen bildhaft darzustellen. Um die Entstehung von Halo-Erscheinungen nachzuvollziehen, wird schematisch der Verlauf eines Dichtesprungs im Helligkeitsprofil des Bildinhalts dargestellt. Ein solcher sprunghafter Dichteverlauf 31 ist in Fig. 3 zu sehen. Im Rahmen eines automatischen Kontrastmodifikationsverfahrens wird, beispielsweise durch Frequenzfilterung, der Tiefpass 32 gebildet. Dieser Tiefpass 32 wird vom originalen Dichtesignal 31 subtrahiert, so dass als Ergebnis der Hochpassanteil 33 übrigbleibt. Um einen Kontrastausgleich der Bilddaten vorzunehmen, wird nun in herkömmlichen Verfahren der Tiefpassanteil 32 reduziert, indem er mit einer nicht linearen Kennlinie multipliziert wird. In der vereinfachten schematischen Darstellung, zur Erläuterung der Erfindung, wurde der Tiefpass beispielsweise mit einer konstanten Kennlinie von 2/3 multipliziert, so dass sich der reduzierte Tiefpass 34 ergibt. Wird dieser im Kontrastumfang nun reduzierte Tiefpass 34 mit dem Hochpass-Signal 33 addiert, um so ein Bildsignal zu kreieren, bei dem die Detailinformation identisch erhalten bleibt, der Großflächenkontrast, der sich beispielsweise bei Schlagschatten in Gesichtern negativ bemerkbar macht, aber verringert ist. So ergibt sich die kontrastreduzierte Funktion 35. Bei diesem kontrastreduzierten Dichteverlauf 35 zeigt sich nun nicht mehr der konstante Dichteverlauf des Ausgangssignals 31, sondern ein Über- bzw. Unterschreiten des jeweils konstanten Dichtewerts im Umfeld der Kante. Diese sogenannten Überschwinger machen sich im Bild als störende Halos entlang der Kante bemerkbar. Ihr Erscheinungsbild wird vor allem deshalb so störend empfunden, da sie weit in den homogenen Bildbereich hin sichtbar sind. Durch den Einsatz kantenabhängiger Tiefpass-Signale bei der Kontrastmodifikation kann dieses Phänomen vermieden werden. So wird der Tiefpass erfindungsgemäß an den Kanten, also im Bereich starker hochfrequenter Bildanteile mit einem stark hochfrequenten Anteil beaufschlagt, indem entweder die Filterfrequenz hochgesetzt wird oder ein Anteil des Hochpass-Signals zum Tiefpass-Signal addiert wird. In den kantenfemen Bildanteilen wird weiterhin ein rein tieffrequentes Tiefpass-Signal gebildet, die Filterfrequenz kann unter Umständen sogar tiefer gewählt werden als in herkömmlichen Verfahren. Bei diesem erfindungsgemäßen Vorgehen ergibt sich dann aus dem in Fig. 4 dargestellten originalen Bildsignal 41 das Tiefpass-Signal 42, welches die Kante des Dichtesprungs deutlich besser wiedergibt als das in Fig. 3 dargestellte Tiefpass-Signal 32. Zieht man nun dieses Tiefpass-Signal 42 von den Originaldaten 41 ab, so ergibt sich das Hochpass-Signal 43, dessen Abfall auf den direkten Umgebungsbereich Erkannte beschränkt ist. Das reduzierte Tiefpass-Signal, das sich bei diesem erfindungsgemäßen Vorgehen ergibt, ist in Fig. 4 mit 44 bezeichnet. Wird dieses reduzierte Tiefpass-Signal 44 nunmehr zum Hochpass-Signal 43 addiert, so ergibt sich das im Kontrast reduzierte Bildsignal 45. Da durch diesen hochfrequenteren Tiefpass-Signalanteil im Bereich des Dichtesprungs die Kante nicht bis weit in den homogenen Bildbereich hineingezogen wird, sind wie in 45 zu sehen ist, die noch entstehenden Überschwinger deutlich schmäler als bei dem in Fig. 3 dargestellten herkömmlichen Verfahren. Werden zum Tiefpass-Signal noch hochfrequentere Anteile hinzuaddiert, so kann das Ausmaß der Überschwinger noch weiter eingeschränkt werden. Im Bildeindruck ergibt sich damit nur noch ein sehr schmaler Bereich der Dichteunter- oder Überschreitung im Bereich der Kante. Da das Auge jedoch auf den größeren Dichtesprung fixiert ist, wird diese kleine Über- bzw. Unterschreitung nicht wahrgenommen, solange sie sich nicht bis weit in den homogenen Dichtebereich hinein erstreckt. Die in Fig. 3 schematisch dargestellten störenden Halo-Erscheinungen können also durch das in Fig. 4 schematisch dargestellte erfindungsgemäße Verfahren der kantenabhängigen Tiefpassbildung zur Kontrastmodifikation weitgehend eingeschränkt werden, so dass auch bei einer starken Beschränkung des Kontrastumfangs keine störenden Artefakte an den Dichtesprüngen sichtbar werden.

Das beschriebene Verfahren lässt sich selbstverständlich ebenso, wie auf die Helligkeitskomponente der digitalen Bilddatenauch auf die Farbkomponenten anwenden. Auch bei einer Modifikation des Farbkontrastes, welche notwendig wird, wenn im Ausgabegerät zu wenig Farbstufen zur Verfügung stehen, kann das erfindungsgemäße Verfahren vorteilhaft eingesetzt werden.

## Patentansprüche

1. Bildverarbeitungsvertahren zur automatischen Kontrastmodifikation digitaler Bilddaten, bei dem vom Bildsignal der Bilddaten wenigstens ein tief- und ein hochfrequenter Signalanteil gebildet, der tieffrequente Signalanteil mittels einer Kennlinie modifiziert und der modifizierte, tieffrequente Signalanteil wieder mit dem hochfrequenten Signalanteil addiert wird, **dadurch gekennzeichnet, dass** die Bildung des zu modifizierenden, tieffrequenten Signalanteils in Abhängigkeit von hochfrequenten Bildanteilen erfolgt.

2. Bildverarbeitungsverfahren nach Anspruch 1, **dadurch gekennzeichnet, dass** die Filterfrequenz zur Bildung des tieffrequenten Signalanteils in Abhängigkeit von den hochfrequenten Bildanteilen variiert wird.

3. Bildverarbeitungsvertahren nach Anspruch 2, **dadurch gekennzeichnet, dass** die Filterfrequenz zur Bildung des tieffrequenten Signalanteils abhängig vom lokalen Frequenzspektrum des Bildes variiert wird.

4. Bildverarbeitungsverfahren nach Anspruch 1, **dadurch gekennzeichnet, dass** im Bereich von hochfrequenten Bildanteilen zum tieffrequenten Signalanteil ein höherfrequenter Signalanteil addiert wird.

5. Bildverarbeitungsverfahren nach einem der Ansprüche 1-4, **dadurch gekennzeichnet, dass** die hochfrequenten Bildanteile durch ein Kantendetektionsverfahren ermittelt werden.

6. Bildverarbeitungsverfahren nach einem der Ansprüche 1-4, **dadurch gekennzeichnet, dass** die hochfrequenten Bildanteile aus der Fouriertransformierten der digitalen Bilddaten ermittelt werden.

7. Bildverarbeitungsverfahren nach einem der Ansprüche 1-3, **dadurch gekennzeichnet, dass** die hochfrequenten Bildanteile aus den komprimierten Bilddaten ermittelt werden.
